# EUROPÄISCHE PATENTANMELDUNG

(11) **EP 1 655 327 A1**
(43) Veröffentlichungstag der Anmeldung: **10.05.2006**
(21) Anmeldenummer: 05022580.4
(22) Anmeldetag: 17.10.2005
(51) Int. Cl.: C08K 3/08, G06K 19/067

(54) **Permanent magnetische Mischung, Verfahren zu ihrer Herstellung und ihre Verwendung**

(30) Priorität: 05.11.2004 DE 102004054038
(71) Anmelder: Carl Freudenberg KG, 69469 Weinheim (DE)
(72) Erfinder: Schauber, Thomas, Dr., 69502 Hernsbach (DE); Heinrich, Ralf, Dr., 69469 Weinheim (DE); Klatt, Christopher, Dr., 69118 Heidelberg (DE); Kober, Horst, 69469 Weinheim (DE)

(57) **Zusammenfassung**

Die Erfindung betrifft ein permanent magnetische Mischung aus einem thermoplastischen Elastomer und einem magnetischen Füllstoff, ein Verfahren ihrer Herstellung und ihre Verwendung.

Erfindungsgemäß wird die Aufgabe dadurch gelöst, dass die permanent magnetische Mischung mindestens ein thermoplastisches Polyurethan mit einem Schmelzbereich von 100 bis 250 °C und mindestens einen magnetischen Füllstoff enthält.

## Beschreibung

Die Erfindung betrifft ein permanent magnetische Mischung aus einem thermoplastischen Elastomer und einem magnetischen Füllstoff, ein Verfahren ihrer Herstellung und ihre Verwendung.

Aus dem Dokument US 6,476,113 B1 sind permanent magnetische Mischungen bekannt, die aus der Gruppe bestehend aus thermoplastischen und thermoverfestigten Elastomeren ausgewählt sind und die eine Vielzahl von magnetischen Füllstoff-Partikel dispergiert enthalten, die zu einer Ausrichtung fähig sind und vor, während oder nach der Formung des Elastomers magnetisiert werden.
Als heißhärtendes (thermosetting) Elastomer ist Polyurethan genannt, das durch Mischung der Polyolkomponente mit den magnetischen Füllstoff-Partikel und reaktive Härtung mit der Isocyanatkomponente erhalten wird. Es handelt sich hierbei um ein vernetztes und nicht thermoplastisches System.

Die Erfindung hat sich die Aufgabe gestellt, eine permanent magnetische Mischung anzugeben, einen hohen Füllgrad mit magnetischen Füllstoff-Partikeln ermöglicht, eine hohe Festigkeit, Dehnbarkeit und Elastizität sowie Ozon- und Ölbeständigkeit aufweist. Die Erfindung hat sich weiterhin die Aufgabe gestellt, ein Verfahren zur Herstellung einer permanent magnetischen Mischung und Verwendungen dieser Mischungen anzugeben.

Erfindungsgemäß wird die Aufgabe dadurch gelöst, dass die permanent magnetische Mischung mindestens ein thermoplastisches Polyurethan (TPU) mit einem Schmelzbereich zwischen 100 und 250 °C und mindestens einen magnetischen Füllstoff enthält. Als Schmelzbereich wird der Bereich definiert, in dem das Material in der DSC-Messung Schmelzpeaks, also endotherme Übergänge aufweist, ohne sich zu zersetzen. Solche Mischungen ermöglichen einen Füllgrad mit magnetisierbaren Füllstoff-Partikeln wie metallischen Eisen, Kobalt oder Nickel, deren Legierungen oder Oxiden mit Barium, Bor, Kupfer, Neodym, Promethium, Samarium oder Strontium bis zu 90 Gew.%. Entsprechende magnetisierbare Füllstoffe sind dem Dokument US 6,476,113 B1 zu entnehmen, dessen Offenbarung hier mit einbezogen ist. Die erfindungsgemäßen permanent magnetischen Mischungen besitzen auch bei hohen Füllgraden von 85 Gewichts-% noch eine Festigkeit von etwa 2 MPa und eine hohe Flexibilität. Sie besitzen eine Viskosität, eine Verarbeitung mit den herkömmlichen Methoden der Thermoplastverarbeitung erlauben und sie gestatten die Verklebbarkeit mit Epoxidharzen. Die erfindungsgemäßen permanent magnetischen Mischungen sind rezyklierbar, so dass Ausschuss-, Verschnitt- oder Anguss-Stücke wieder verwendbar sind. Die erfindungsgemäßen permanent magnetischen Mischungen weisen darüber hinaus eine für das Basispolymer TPU typische, besondere Beständigkeit gegenüber Ozon und gegenüber Öl auf.
Thermoplastische Polyurethane sind Polymere, die einen weitgehend linearen Aufbau besitzen und aus den Isocyanaten MDI (Methylendiphenyldiisocyanat), TODI (Ditolyl-Diisocyanat), NDI (Naphthylendiisocyanat), TDI (Toluylendiisocyanat), IPDI (Isophorondiisocyanat), HDI (Hexamethylendiisocyanat), HMDI (hydriertes Methylendiphenyldiisocyanat), sowie deren Isomerengemische und Gemischen mehrerer dieser Isocyanate, Polyolen, sowie niedermolekularen Kettenverlängerern aufgebaut sind. Polyole sind kurzkettige Polymere (Molekulargewichte zwischen 800 und 5000 g/mol) mit OH-Endfunktionalisierung auf der Basis von Polyestern, Polycarbonaten, Polyothern, Polybutadiene, Polysiloxane, Kettenverlängerer sind niedermolekulare Verbindungen mit Molekulargewichten von 60 bis 800 und zwei oder mehr OH-Gruppen im Molekül. Es sind Gemische verschiedener Kettenverlängerer möglich, wobei der Hauptanteil des Kettenverlängerers difunktionell sein muss, jedoch bis zu 10 mol% Triol möglich sein können. Das molare Verhältnis der Isocyanatgruppen zur Gesamtzahl der OH-Gruppen (aus Polyol und Kettenverlängerer), aus denen das TPU aufgebaut ist, soll im Bereich von 0,9 bis 2 liegen. Ein Verhältnis von Isocyanat und OH-Gruppen von etwa 1 erlaubt eine Standard-Thermoplastverarbeitung. Hoher Isocyanatüberschuß im Material erlaubt die Verarbeitung mit Methoden aus der Thermoplastverarbeitung, sowie eine anschließende Nachvernetzung des fertigen Produktes durch Feuchtigkeit, welche die Festigkeit und die Temperaturbeständigkeit erhöht.

Vorteilhafterweise lassen sich auch Blends einsetzen, bei denen das thermoplastische Polyurethan Blendkomponenten aus der Gruppe der Thermoplasten und thermoplastischen Elastomere wie Polyvinylchlorid, Polyester, Polycarbonate, Polyamide, Polycaprolactone, Polysulfide, unchlorierte oder chlorierte Polyolefine, Polyisoprene und/oder Chloroprene in Mengen bis zu 70 Gew.% enthält.

Dem TPU oder TPU enthaltenden Blend lassen sich auch Verarbeitungs- und Produktverbesserungsmittel wie Weichmacher, interne Trennmittel, Fließhilfsmittel, Alterungsschutzmittel, Kompatibilisatoren, Stabilisatoren und/oder Fasern in Mengen bis zu 20 Gew.% zusetzen.

Das erfindungsgemäße Verfahren zur Herstellung einer Mischung erfolgt in der Weise, dass das thermoplastische Polyurethan oder ein dieses TPU enthaltender Blend in einem Ein- oder Mehrschneckenextruder oder einem Innenmischer mit dem magnetischen Füllstoff im Volumenverhältnis von 2 : 1 bis 1 : 2,3 gemischt wird.

Die erfindungsgemäße Mischung kann durch Spritzguss, Extrusion, Heißpressen (compression molding oder transfer molding), Blasformen, Sintern oder Tauchen verarbeitet werden.

Vorteilhafterweise werden dem thermoplastischen Polyurethan Formaldehyd abspaltende Zusätze oder Di-, Tri- oder Polyisocyanate in Mengen bis zu 10 Gew.% zugesetzt und durch Zusatz von Photoinitiatoren durch Bestrahlung mit elektromagnetischer oder ionisierender Strahlung nach der thermoplastischen Verarbeitung eine Vernetzung vorgenommen. Die Wärmeformbeständigkeit des Materials kann damit je nach Grad der Nachvernetzung und bis zu 30°C erhöht werden.

Besonders bevorzugt ist die Verwendung einer permanent magnetischen Mischung für Anwendungen im Temperaturbereich von -40 bis 100°C, wobei die Polyurethankomponente einen Polyether als Polyolkomponente enthält.

Vorzugsweise erfolgt eine Verwendung einer permanent magnetischen Mischung für Anwendungen im Temperaturbereich von -20 bis 140°C wobei die Polyurethankomponente ein Polycaprolacton, einen Polyester und/oder ein Polycarbonat als Polyolkomponente enthält.

Weiterhin kann die permanent magnetische Mischung als Encoder, in einer magnetisch haftenden Anwendung oder als Datenspeicher beziehungsweise Informationsträger verwendet werden.

Die Erfindung wird nachfolgend an Hand von Beispielen näher erläutert.

### Beispiele

### Herstellurtg des TPU:

Das thermoplastische Polyurethan wird in einem Standard-Herstellungsprozess gefertigt, der im Prepolymer- oder One-Shot-Verfahren geführt werden kann. Für die batchweise TPU-Herstellung im Prepolymerverfahren wird das geschmolzene und auf 80°C gehaltene Isocyanat mit dem Polyesterpolyol (Butylenglykol mit dem mittleren Molgewicht 2000 g/mol) im Gewichtsverhältnis 50 zu 100 gemischt, wobei die Temperatur nach dem Aufheizen durch die Reaktionswärme bei 120°C gehalten wird. Nach 20 Minuten wird der NCO-Gehalt bestimmt und die Menge des Kettenverlängerers Butandiol auf einen Isocyanat-Index (Molverhältnis NCO/OH) von 0,99 berechnet. Das Butandiol wird dem Prepolymer in der berechneten Menge zugegeben und eine Minute mit einem Flügelrührer intensiv eingerührt. Das reagierende Gemisch wird in eine auf 120°C beheizten Teflonform zu einer 3cm dicken Platte ausgegossen und eine Stunde bei dieser Temperatur nachgeheizt. Nach dem Abkühlen auf Umgebungstemperatur wird die Platte zu rieselfähigem Splitgranulat gehäckselt. Dieses kann im Spritzguss zu Prüfplatten verarbeitet werden. Es ergibt sich ein TPU mit einer Härte von 90 Shore A, einer Zugfestigkeit von 55 MPa (S2-Prüfstab) und einem Schmelzbereich von etwa 150-170°C.

### Herstellung des Compounds:

Pulverförmiges Strontiumferrit (Type HM181) wird zur Trocknung über Nacht auf 120°C erhitzt. Das nach dem oben beschriebenen Verfahren hergestellte TPU wird im Kaltmahlverfahren unter Kühlung mit flüssigem Stickstoff zu Pulver mit einer Komgröße kleiner als 500 Mikrometer gemahlen und über Nacht bei 100°C im Ofen getrocknet.
Die beiden Pulver werden in den in Tabelle 1 beschriebenen Gewichtsverhältnissen eingewogen und im Taumelmischer intensiv vermischt. Mittels einer Pulverdosierung wird die Pulvermischung in einen Zweischneckencompounder kontinuierlich zudosiert, der eine Knetzone enthält und und im mittleren Bereich auf 240°C temperiert ist. Der bei einer Düsentemperatur von 230°C extrudierte Strang wird mittels eines Stranggranulators granuliert und das Granulat durch Heißpressen zu Platten von 1mm Dicke gepresst.

### Herstellung der Prüfkörper (Encoder):

Die Versuche zur Magnetisierung werden an seriennahen Encoderbauteilen durchgeführt, die zur Magnetisierung in die Produktionslinie eingelegt werden, um vergleichbare Daten zu den Serienbauteilen zu erhalten. Hierfür werden die Pressplatten mittels eines 2-Komponenten-Epoxidharzkleber (Uhu-Plus) auf einen mit Aceton entfetteten Stahlring aus der Encoderfertigung geklebt. Nach vollständigem Aushärten der Verklebung über Nacht werden die Konturen auf der Drehbank abgestochen.

### Magnetisierung:

Die Magnetisierung der Encoder geschieht mittels eines Kupfermeanders, der von einem Hochstrompuls durchflossen wird. Die Form der auf den Encoder aufmagnetisierten Pole wird durch den Kupfermeander vorgegeben. Der Kupfermeander wird je nach Genauigkeitsanforderungen durch einen Keramik- oder Kunststofftragkörper gehalten. Der Hochstrompuls wird durch Entladung einer Kondensatorbank erzeugt.

### Messanordnung:

Für die Messungen wird der Encoder auf eine rotierende Achse mit Winkelgeber montiert. Mittels eines drehbar montierten Hall-Sensors werden die Komponenten des Magnetfelds für verschiedene axiale und radiale Positionen gemessen und die Messergebnisse in Tabellenform "Winkelposition - Magnetfeldkomponente" aufgezeichnet. Falls notwendig können die gemessenen Werte mit tabellierten Sollwerten verglichen und die tabellarischen Einzelmessungen durch Softwarewerkzeuge in die vollständige Vektordarstellung "Sensorposition - Magnetfeldvektor" zusammengeführt werden.

### Vergleichsbeispiel

### Herstiellungsverfahren für die Serienencoder:

Die Vergleichsproben werden hergestellt, indem der NBR-Rohkautschuk im Innenmischer zusammen mit den Additiven, Füllstoffen und dem Strontiumfernit zu einer homogenen Masse gemischt und durch Abbau plastfiziert wird. Die so erhaltene Elastomer-Rohmasse wird auf dem Walzwerk nachhomogenisiert. Aus dem entstehenden Walzfell werden Rohlinge geformt, die im Compression Molding-Verfahren auf den Stahlringträger, der vorher entfettet und mit einem Haftvermittler behandelt wurde, überführt. Die so erhaltenen Rohlinge werden in der Vulkanisationspresse bei erhöhter Temperatur ausvulkanisiert.

Der Vergleich der Beispiele und das Vergleichsbeispiel sind in der Tabelle 1 zusammengefasst.

**Tabelle 1**

| Beispiel | Compoundierbarkeit | Gewichts -anteil TPU (%) | Gewichts -anteil SrFe (%) | Volumenanteil TPU (%) | Volumenanteil SrFe (%) | Magnet Feldstärke (mT) |
|---|---|---|---|---|---|---|
| V1 | Serienmaterial (NBR-based) | 20 NBR | **80** | | | **18,1** |
| 1 | sehr gut | 30 | **70** | 65,2 | **34,8** | **ungeprüft** |
| 2 | sehr gut | 25 | **75** | 59,3 | **40,7** | **ungeprüft** |
| 3 | sehr gut | 20 | **80** | 52,2 | **47,8** | **21,2** |
| 4 | gut | 15 | **85** | 45,5 | **56,5** | **27,7** |
| 5 | möglich | 12,5 | **87,5** | 38,4 | **61,6** | **40,1** |
| 6 | | 10 | **90** | 32,7 | **67,3** | **-** |

## Patentansprüche

1. Permanent magnetische Mischung aus einem thermoplastischen Elastomer und einem magnetischen Füllstoff, **dadurch gekennzeichnet, dass** sie mindestens ein thermoplastisches Polyurethan mit einem Schmelzbereich zwischen 100 und 250°C und mindestens einen magnetischen Füllstoff enthält.

2. Mischung nach Anspruch 1, **dadurch gekennzeichnet, dass** sie mindestens ein thermoplastisches Polyurethan mit einem Schmelzbereich zwischen 140 bis 180°C und mindestens einen magnetischen Füllstoff enthält.

3. Mischung nach Anspruch 1 oder 2, **dadurch gekennzeichnet, dass** das thermoplastische Polyurethan Blendkomponenten aus der Gruppe der Thermoplasten und thermoplastischen Elastomere wie Polyvinylchlorid, Polyester, Polycarbonate, Polyamide, Polycaprolactone, Polysulfide, unchlorierte oder chlorierte Polyolefine, Polyisoprene und/oder Chloroprene in Mengen bis zu 70 Gew.% enthält.

4. Mischung nach Anspruch 1 bis 3, **dadurch gekennzeichnet, dass** sie Weichmacher, interne Trennmittel, Fließhilfsmittel, Alterungsschutzmittel, Stabilisatoren und/oder Fasern in Mengen bis zu 10 Gew.% enthält

5. Verfahren zur Herstellung einer Mischung nach Anspruch 1 bis 4, **dadurch gekennzeichnet, dass** das thermoplastische Polyurethan in einem Ein- oder Mehrschneckenextruder oder einem Innenmischer mit dem magnetischen Füllstoff im Volumenverhältnis von 2 : 1 bis 1 : 2,3 gemischt wird.

6. Verfahren nach Anspruch 5, **dadurch gekennzeichnet, dass** die Mischung durch Spritzguss, Extrusion, Heißpressen (compression molding oder transfer molding), Blasformen, Sintern oder Tauchen verarbeitet wird.

7. Verfahren nach Anspruch 5 oder 6, **dadurch gekennzeichnet, dass** dem thermoplastischen Polyurethan Formaldehyd abspaltende Zusätze oder Di-, Tri- oder Polyisocyanate in Mengen bis zu 10 Gew.% zugesetzt werden und durch Bestrahlung mit elektromagnetischer oder ionisierender Strahlung nach der thermoplastischen Verarbeitung eine Vernetzung vorgenommen wird.

8. Verwendung einer permanent magnetischen Mischung nach einem der Ansprüche 1 bis 4 oder hergestellt nach einem der Ansprüche 5 bis 7, **dadurch gekennzeichnet, dass** sie für Anwendungen im Temperaturbereich von -40 bis 100°C eingesetzt wird, wobei die Polyurethankomponente einen Polyether als Polyolkomponente enthält.

9. Verwendung einer permanent magnetischen Mischung nach einem der Ansprüche 1 bis 4 oder hergestellt nach einem der Ansprüche 5 bis 7, **dadurch gekennzeichnet, dass** sie für Anwendungen im Temperaturbereich von -20 bis 150°C eingesetzt wird, wobei die Polyurethankomponente ein Polycaprotaaton, einen Polyester und/oder ein Polycarbonat als Polyolkomponente enthält.

10. Verwendung einer permanent magnetischen Mischung nach einem der Ansprüche 1 bis 4 oder hergestellt nach einem der Ansprüche 5 bis 7 als Encoder.

11. Verwendung einer permanent magnetischen Mischung nach einem der Ansprüche 1 bis 4 oder hergestellt nach einem der Ansprüche 5 bis 7 in einer magnetisch haftenden Anwendung.

12. Verwendung einer permanent magnetischen Mischung nach einem der Ansprüche 1 bis 4 oder hergestellt nach einem der Ansprüche 5 bis 7 als Datenspeicher oder Informationsträger.
